# EUROPÄISCHE PATENTANMELDUNG

(11) **EP 4 717 963 A1**
(43) Veröffentlichungstag der Anmeldung: **01.04.2026**
(21) Anmeldenummer: 25204167.8
(22) Anmeldetag: 23.09.2025
(51) Int. Cl.: F16L 13/14, F16L 33/20

(54) **FITTING ZUM VERBINDEN MIT EINER TRINKWASSERROHRLEITUNG UND DESSEN VERWENDUNG**

(30) Priorität: 25.09.2024 DE 102024127691
(71) Anmelder: Viega Technology GmbH & Co. KG, 57439 Attendorn (DE)
(72) Erfinder: Kaufmann, Natascha, 57439 Attendorn (DE); Rocksloh, Stefan, 57439 Attendorn (DE); Schauerte, Bastian, 57439 Attendorn (DE); Hoffmann, Nils, 57439 Attendorn (DE)
(74) Vertreter: Cohausz & Florack

(57) **Zusammenfassung**

Die Erfindung betrifft einen Fitting (2) zum Verbinden mit einer Trinkwasserrohrleitung (4), wobei der Fitting (2) einen Kanal (8) zum Führen von Trinkwasser aufweist, wobei der Fitting (2) an mindestens einem Ende (12, 14) des Kanals (8) zum Verbinden mit einer Trinkwasserrohrleitung (4) ausgebildet ist, und wobei mindestens ein Bauteil (6, 16) des Fittings (2, 52), das, wenn der Fitting (2) mit einer Trinkwasserrohrleitung (4) verbunden ist und Trinkwasser durch den Kanal (8) geleitet wird, in direktem Kontakt mit dem Trinkwasser steht, einen Polyaryletherketon umfassenden Kunststoff umfasst oder daraus besteht.

## Beschreibung

Die vorliegende Erfindung betrifft einen Fitting zum Verbinden mit einer Trinkwasserrohrleitung, wobei der Fitting einen Kanal zum Führen von Trinkwasser aufweist und wobei der Fitting an mindestens einem Ende des Kanals zum Verbinden mit einer Trinkwasserrohrleitung ausgebildet ist. Die vorliegende Erfindung betrifft weiter eine Verwendung des Fittings.

Im Stand der Technik werden für Trinkwasserrohrleitungen aus Kunststoff oder Mehrschichtverbund Fittings aus Metall und/oder Kunststoff verwendet. Fittings aus Kunststoff sind leichter und in der Regel kostengünstiger herzustellen. Es ist jedoch darauf zu achten, dass die eingesetzten Kunststoffe, insbesondere von Teilen, die im Betrieb mit dem Trinkwasser in Kontakt kommen, zu keiner Verunreinigung dieser Medien führen und hierfür zugelassen sind. Dies ist insbesondere bei Fittings für Trinkwasserrohrleitungen kritisch.

Darüber hinaus müssen die eingesetzten Kunststoffe bestimmten mechanischen Eigenschaften genügen. Dies gilt insbesondere bei Pressfittings, die beim Verpressen mit einer Rohrleitung hohen Kräften ausgesetzt werden.

Ein gängiger organischer Werkstoff in Kunststoff-Rohrleitungssystemen, der auch für Fittings zu deren Verbindung, beispielsweise Press-, Schiebe- oder Steckfittings, eingesetzt wird, ist der Hochleistungskunststoff Polyphenylensulfon (PPSU).

Polyphenylensulfon wird unter anderem als Werkstoff für Stütz- oder Grundkörper bzw. andere Formstücke eingesetzt, die eine Abdichtfunktion zu Kunststoff- und Mehrschichtverbundrohren gegenüber dem zu leitenden Medium (zum Beispiel Wasser, Gas, Luft, Regenwasser, Wasser-/Glykol-Gemische) sicherstellen. Aufgrund der sehr guten mechanischen Eigenschaften wie Steifigkeit und Festigkeit, der hohen Kriech- und Temperaturbeständigkeit und der Hydrolysebeständigkeit kann die Abdichtung zum Medium häufig ohne zusätzliche Weichdichtung, zum Beispiel aus Ethylen-Propylen-Dien-Kautschuk (EPDM), erfolgen.

Nachteilig wirkt sich jedoch die Spannungsrissempfindlichkeit des amorphen Werkstoffs PPSU bei Kontakt mit einigen Chemikalien wie z.B. Methylethylketon (MEK) aus. Entsprechende Chemikalien kommen teilweise in Hilfsstoffen und Arbeitsmitteln vor, die auf der Baustelle eingesetzt werden (z.B. Lecksuchsprays, anaerobe Kleberstoffe, Reiniger, Bauschäume etc.). Diese führen in Kombination mit Spannungen im Werkstoff, die z.B. durch den Fertigungsprozess oder Verpressvorgang induziert werden, zum Versagen des Bauteils. Hieraus können Leckagen oder ein Versagen des Rohrleitungssystems und damit große Schäden und hohe Reklamationssummen resultieren.

Aktuell kann der Herausforderung nur durch entsprechende Warnungen und Restriktionen in der Gebrauchsanweisung und/oder Anwenderrichtlinien begegnet werden. Dies gestaltet sich aber als schwierig, da regelmäßig neue Hilfsstoffe auf Baustellen zu finden sind und/oder sich die Rezepturen der Hersteller ändern. Alternativ kann der konstruktive Aufbau der Rohrleitungsverbinder geändert werden, sodass metallische Werkstoffe wie Edelstahl (Inox) oder Siliziumbronze (SiBr) als Stützkörperwerkstoff zum Einsatz kommen. Diese können aber erhebliche Nachteile wie z.B. höhere Strömungswiderstände aufgrund von Normen und Standards, Notwendigkeit einer Weichdichtung oder höhere Herstellkosten aufweisen und sind teilweise auch nicht für alle Medien und Chemikalien zulässig.

Aus der WO 2021/252275 A1 ist eine Schlauchkuppelung mit einem hochfesten Einsatz aus einer Mischung aus einem Kunststoff und Verstärkungsfasern zum Transport von Flüssigkeiten im Öl- und Gasbereich bekannt. Als Kunststoff wird unter anderem Polyaryletherketon genannt. Für Trinkwasseranwendungen ist die Schlauchkuppelung nicht vorgesehen. Ohnehin wäre der hohe Anteil an Verstärkungsfasern problematisch für den Einsatz in Trinkwasseranwendungen, da rechtliche Trinkwasservorgaben (s. z.B. "Bewertungsgrundlage für Kunststoffe und andere organische Materialien im Kontakt mit Trinkwasser" des Umweltbundesamts Deutschland, 2022) den Einsatz von Schlichten, die zur Einbettung der Verstärkungsfasern im Kunststoff erforderlich sind, stark einschränken.

Vor diesem Hintergrund liegt der vorliegenden Erfindung die Aufgabe zu Grunde einen Fitting und dessen Verwendung vorzuschlagen, der die zuvor genannten Nachteile zumindest teilweise reduziert oder vermeidet.

Die zuvor genannte Aufgabe wird erfindungsgemäß gelöst durch einen Fitting zum Verbinden mit einer Trinkwasserrohrleitung, wobei der Fitting einen Kanal zum Führen von Trinkwasser aufweist und wobei der Fitting an mindestens einem Ende des Kanals zum Verbinden mit einer Trinkwasserrohrleitung ausgebildet ist, wobei mindestens ein Bauteil des Fittings, das, wenn der Fitting mit einer Trinkwasserrohrleitung verbunden ist und Trinkwasser durch den Kanal geleitet wird, in direktem Kontakt mit dem Trinkwasser steht, einen Polyaryletherketon umfassenden Kunststoff umfasst oder daraus besteht.

Polyaryletherketon (PAEK) ist eine Stoffgruppe von Polymeren, insbesondere Thermoplasten, deren Polymerstruktur grundsätzlich sich abwechselnde Keton- und Ethergruppen mit Arylgruppen als verbindende Gruppen aufweist. Beispiele für Polyaryletherketone sind Polyetheretherketon (PEEK), Poly(etheretheretherketon) (PEEEK), Poly(etheretherketonketon) (PEEKK), Poly(etherketon-etherketonketon) (PEKEKK) oder Poly(etherdiphenyl-etherketon) (PEDEK).

Es wurde festgestellt, dass Polyaryletherketon (PAEK), das aufgrund seiner teilkristallinen Struktur eine gute Chemikalienbeständigkeit aufweist, auch eine gute Resistenz gegenüber auf der Baustelle als Hilfsstoffen und Arbeitsmitteln (z.B. Lecksuchsprays, anaerobe Kleberstoffe, Reiniger, Bauschäume etc.) genutzten Bauchemikalien, beispielsweise Methylethylenketon (MEK), aufweist. Der Einsatz von Fittings mit Polyaryletherketon erlaubt daher auch den Einsatz solcher Bauchemikalien, die bei konventionellen Fittings für Trinkwasserfittings zu Spannungsrissen führen. Der beschriebene Fitting führt dadurch zu einem robusteren Rohrleitungssystem und somit einerseits zu einer Risikoreduzierung für den Handwerker beim Einsatz solcher Chemikalien und andererseits zu weniger Schadensfällen.

Polyaryletherketon hat zudem eine gleichwertige oder zum Teil bessere Temperatur- und Kriechbeständigkeit als der häufig eingesetzte Werkstoff PPSU, so dass mit einem solchen Fitting temperaturresistente und dauerhaft dichte Verbindungen mit Trinkwasserrohrleitungen erzeugt werden können. Zudem lässt sich Polyaryletherketon ähnlich gut wie PPSU im Spritzguss verarbeiten, so dass sich die Fittings kostengünstig und maßhaltig herstellen lassen sowie gut in bestehenden Produktionslinien für PPSU-Fittings herstellen lassen.

Der Fitting ist zum Verbinden mit einer Trinkwasserrohrleitung. Es handelt sich bei dem Fitting also insbesondere um einen Fitting, der für die Verwendung in Trinkwasserrohrleitungssystemen zugelassen ist. Dies setzt voraus, dass insbesondere Bauteile, die im installierten Zustand in direktem Kontakt mit dem Trinkwasser stehen, für die Verwendung im Kontakt mit Trinkwasser zugelassen sein müssen, zum Beispiel gemäß der "Bewertungsgrundlage für Kunststoffe und andere organische Materialien im Kontakt mit Trinkwasser" des Umweltbundesamts Deutschland, 2022.

Der Fitting weist einen Kanal zum Führen von Trinkwasser auf. Der Kanal kann insbesondere zwischen einem ersten Ende und einem zweiten Ende verlaufen. Es ist auch denkbar, dass der Fitting zum Beispiel als Abzweigung, beispielsweise als Kreuzungs-T-Stück, ausgebildet ist und der Kanal mehr als zwei Enden aufweist. Der Kanal kann zum Beispiel gerade ausgebildet sein, beispielsweise wenn der Fitting als Kupplung ausgebildet ist, oder eine oder mehrere Krümmungen aufweisen, beispielsweise wenn der Fitting als Winkel, Bogen oder Wandscheibe ausgebildet ist.

Der Fitting ist an mindestens einem Ende des Kanals zum Verbinden mit einer Trinkwasserrohrleitung ausgebildet. Beispielsweise kann der Fitting an dem mindestens eine Ende zum Verpressen oder Verschrauben des Fittings mit einer Trinkwasserrohrleitung ausgebildet sein. Der Fitting kann auch an mehreren Enden des Kanals zum Verbinden mit einer jeweiligen Trinkwasserrohrleitung ausgebildet sein, beispielsweise wenn der Fitting als Kupplung ausgebildet ist.

Mindestens ein Bauteil des Fittings, das, wenn der Fitting mit einer Trinkwasserrohrleitung verbunden ist und Trinkwasser durch den Kanal geleitet wird, in direktem Kontakt mit dem Trinkwasser steht, umfasst einen Polyaryletherketon umfassenden Kunststoff oder besteht daraus. Bei dem Bauteil handelt es sich demnach um ein Bauteil, das im installierten Zustand in direktem Kontakt mit dem Medium steht.

Es wurde festgestellt, dass Polyaryletherketon hygienetechnische Vorgaben für den Kontakt mit Trinkwasser erfüllt. Daher kann Polyaryletherketon für mit Trinkwasser in Kontakt stehende Bauteile verwendet werden. Dies ermöglicht den Einsatz von Polyaryletherketon für ein wesentliches Bauteil des Fittings, beispielsweise für einen Stütz- oder Formkörper des Fittings, das beispielsweise für die Abdichtung des Fittings zur Trinkwasserrohrleitung vorgesehen ist.

In verschiedenen Untersuchungen, insbesondere im Rahmen der vorliegenden Erfindung, wurden verschiedene Ersatzwerkstoffe für PPSU gesucht. Aufgrund jeweiliger spezifischer Nachteile, wie z.B. Kriechneigung, Festigkeit, Temperaturbeständigkeit etc. konnten diese die geforderten Anforderungen an das Formstück oder Stützkörper des Rohrleitungssystems nicht erfüllen. Mit dem vorliegend beschriebenen Fitting kann demgegenüber ein Fitting mit geeigneten mechanischen Eigenschaften und guter Temperaturbeständigkeit zur dauerdichten Verbindung mit Rohrleitungen insbesondere in Trinkwasserleitungssystemen zur Verfügung gestellt werden.

Bei dem Kunststoff, den das Bauteil umfasst oder daraus besteht, handelt es sich vorzugsweise um einen thermoplastischen Kunststoff, insbesondere um einen teilkristallinen thermoplastischen Kunststoff.

Vorzugsweise umfasst der Polyaryletherketon umfassende Kunststoff ein Polymergemisch, das neben Polyaryletherketon ein oder mehrere weitere Polymere enthält, oder besteht daraus. Polyaryletherketone haben einen relativ hohen Materialpreis. Durch die Verwendung eines Polymergemischs können die Materialkosten des Fittings gesenkt werden, indem ein oder mehrere preisgünstigere Polymere mit dem Polyaryletherketon gemischt werden. Es wurde festgestellt, dass sich die vorteilhaften Eigenschaften von Polyaryletherketon, insbesondere die vorteilhaften mechanischen Eigenschaften und die hohe Beständigkeit gegenüber Chemikalien, zumindest teilweise auf das Polymergemisch übertragen, das aufgrund des Bestandteils an ein oder mehreren vorzugsweise preisgünstigeren Polymeren jedoch insgesamt preisgünstiger ist als Polyaryletherketon allein.

Die ein oder mehreren weiteren Polymere umfassen vorzugsweise Polyphenylensulfon (PPSU) und/oder Polyphenylsulfid (PPS). Insbesondere kann der Kunststoff ein Gemisch aus Polyaryletherketon sowie Polyphenylensulfon und Polyphenylsulfid als weitere Polymere enthalten.

Der Polyaryletherketon-Anteil im Polyaryletherketon umfassenden Kunststoff liegt vorzugsweise im Bereich 15 bis 60 Gew.-%. Weiter bevorzugt beträgt der Polyaryletherketon-Anteil im Polyaryletherketon umfassenden Kunststoff maximal 55 Gew.-%, insbesondere maximal 40 Gew.-%. Weiter bevorzugt beträgt der Polyaryletherketon-Anteil im Polyaryletherketon umfassenden Kunststoff mindestens 30 Gew.-%, insbesondere mindestens 35 Gew.-%.

Es wurde festgestellt, dass auf diese Weise ein chemikalienresistenter Fitting mit guten mechanischen Eigenschaften, insbesondere für das Verpressen, wirtschaftlich hergestellt werden kann.

Der Kunststoff kann als Polyaryletherketon einen Kunststoff aus der Polyaryletherketon-Stoffgruppe, beispielsweise PEEK, oder mehrere Kunststoffe aus der Polyaryletherketon-Stoffgruppe, beispielsweise als Gemisch, umfassen.

Der Kunststoff kann beispielsweise Zusatzstoffe wie Füllstoffe oder Pigmente aufweisen. Etwaig vorhandene Zusatzstoffe sind insbesondere derart, dass der Kunststoff insgesamt hygienetechnische Vorgaben für den Kontakt mit Trinkwasser erfüllt.

Der Kunststoff kann insbesondere aus einem Polyaryletherketon-Anteil, insbesondere innerhalb eines der vorgenannten Bereiche, einem Anteil an Zusatzstoffen und einem Rest aus ein oder mehreren weiteren Polymeren bestehen. Der Anteil der Zusatzstoffe im Kunststoff beträgt vorzugsweise max. 15 Gew.-%, weiter bevorzugt max. 10 Gew.- %, insbesondere max. 5 Gew.-%.

Enthält der Kunststoff Polyphenylsulfid als weiteres Polymer, so beträgt der Polyphenylsulfid-Anteil vorzugsweise weniger als 15 Gew.-%, weiter bevorzugt max. 10 Gew.-%. Auf diese Weise wird eine Versprödung des Kunststoffs verhindert.

Die zuvor genannte Aufgabe wird erfindungsgemäß weiterhin gelöst durch die Verwendung des zuvor beschriebenen Fittings oder einer Ausführungsform davon zum Verbinden mit einer Trinkwasserrohrleitung.

Bei der Trinkwasserrohrleitung kann es sich insbesondere um ein Vollkunststoffrohr oder um ein Mehrschichtverbundrohr handeln, das insbesondere eine Innen- und/oder Außenschicht aus Kunststoff aufweist. Der zuvor beschriebene Fitting ist insbesondere zum Verbinden mit solchen Rohrleitungen geeignet. Insbesondere wurde festgestellt, dass der Fitting gut zur sicheren und dauerhaften Abdichtung einer Verbindung mit einer solchen Rohrleitung geeignet ist, insbesondere wenn das Bauteil, das den Polyaryletherketon umfassenden Kunststoff umfasst oder daraus besteht, mit der Kunststoffoberfläche eines Vollkunststoffrohrs oder einer Innen- und/oder Außenschicht aus Kunststoff eines Mehrschichtverbundrohres in Kontakt ist, insbesondere wenn der Polyaryletherketon umfassende Kunststoff des Bauteils mit der Kunststoffoberfläche des Vollkunststoffrohres oder der Innen- und/oder Außenschicht aus Kunststoff des Mehrschichtverbundrohres in Kontakt ist.

Zudem hat sich herausgestellt, dass die mechanischen Eigenschaften von Polyaryletherketon insbesondere bei derartigen Rohrleitungen ausreichend sind, insbesondere beim Verpressen mit einer solchen Rohrleitung.

Bei dem Mehrschichtverbundrohr kann es sich insbesondere um ein Verbundrohr mit mindestens einer Innenschicht und/oder Außenschicht aus Kunststoff und einer damit verbundenen Metallschicht, beispielsweise aus Aluminium oder einer Aluminiumlegierung oder aus Edelstahl, handeln. Unter der Innenschicht wird vorliegend die mit dem durch das Verbundrohr geführten Medium in Kontakt stehende Schicht verstanden. Unter der Außenschicht wird vorliegend die äußerste Schicht des Verbundrohres verstanden. Beispielsweise kann das Mehrschichtverbundrohr eine Außenschicht aus Kunststoff und eine Innenschicht aus Edelstahl aufweisen. Bei der Metallschicht kann es sich insbesondere um eine eingebettete Schicht handeln, die zwischen einer Innenschicht und einer Außenschicht des Mehrschichtverbundrohres eingebettet ist. Beispielsweise kann das Mehrschichtverbundrohr als Metallschicht eine zwischen zwei Kunststoffschichten eingebettete Aluminiumschicht aufweisen. Es sind auch Mehrschichtverbundrohre mit mehr als drei Schichten denkbar.

Die Metallschicht kann beispielsweise mittels Kleber und/oder Haftvermittler mit der Innenschicht und/oder Außenschicht aus Kunststoff verbunden sein.

Bei dem Fitting kann es sich beispielsweise um einen Pressfitting handeln, der durch Verpressen mit der Trinkwasserrohrleitung verbunden wird, insbesondere durch radiales oder radial-axiales-Verpressen. Zu diesem Zweck weist der Fitting an dem mindestens einen Ende vorzugsweise einen Stützkörper zum Aufpressen der Trinkwasserrohrleitung auf. Der Stützkörper ist vorzugsweise auf seiner Außenseite profiliert.

Weiterhin kann es sich bei dem Fitting um einen Steckfitting handeln, der durch Aufstecken mit der Trinkwasserrohrleitung verbunden wird. Der Fitting kann entsprechend insbesondere als Steckverbinder ausgebildet sein.

Weiterhin kann es sich bei dem Fitting um einen Schraubfitting handeln, der durch Verschrauben mit der Trinkwasserrohrleitung verbunden wird. Zu diesem Zweck weist der Fitting an dem mindestens einen Ende vorzugsweise ein Innen- und/oder Außengewinde auf. Der Fitting kann entsprechend insbesondere als Schraubverbinder ausgebildet sein.

Weiterhin kann es sich bei dem Fitting um einen Schiebehülsenfitting handeln, der durch Aufschieben einer Schiebehülse mit der Trinkwasserrohrleitung verbunden wird. Zu diesem Zweck weist der Fitting an dem mindestens einen Ende vorzugsweise eine verschiebbare Schiebehülse auf. Der Fitting kann entsprechend insbesondere als Schiebehülsenverbinder ausgebildet sein.

Im Folgenden werden verschiedene Ausführungsformen des Fittings und der Verwendung beschrieben, wobei die einzelnen Ausführungsformen jeweils unabhängig voneinander für den Fitting und die Verwendung gelten. Darüber hinaus können die einzelnen Ausführungsformen beliebig miteinander kombiniert werden.

Bei einer Ausführungsform handelt es sich bei dem Bauteil um einen Stützkörper des Fittings. Unter einem Stützkörper des Fittings wird vorliegend das Bauteil des Fittings verstanden, auf den das Material eines Rohrendes beim Verpressen mit dem Rohrende aufgeformt wird. Der Stützkörper weist zu diesem Zweck vorzugsweise eine außenseitige Profilierung auf, die beim Verpressen in das Material des Rohrendes eingeformt wird. Der Stützkörper kann mit einen Grundkörper des Fittings verbunden oder einteilig mit diesem ausgebildet sein. Der Grundkörper des Fittings gibt insbesondere die Ausgestaltung des Fittings, beispielsweise als Bogen, Kupplung oder T-Stück vor. Bei einer zweiteiligen Ausbildung von Stützkörper und Grundkörper kann der Grundkörper insbesondere aus einem anderen Material bestehen als der Stützkörper, beispielsweise aus einem Metall wie zum Beispiel Silizium-Bronze (SiBr). Die einteilige Ausgestaltung von Stützkörper und Grundkörper wird als Formstück bezeichnet.

Es wurde festgestellt, dass die guten mechanischen Eigenschaften von Polyaryletherketon dessen Einsatz insbesondere für Bauteile des Fittings zulassen, die zum Beispiel beim Verbinden mit einem Trinkwasserrohrleitung hohen mechanischen Belastungen standhalten müssen, wie zum Beispiel ein Stützkörper eines Pressfittings. Weiterhin wurde festgestellt, dass sich Polyaryletherketon aufgrund seiner guten Spritzgießfähigkeit auch für Formstücke eignet, insbesondere auch für komplexer geformte sowie größere Formstücke, beispielsweise für einen einteilig mit einem Stützkörper gebildeten Grundkörper des Fittings, der den Kanal oder einen Teil davon bildet.

Bei einer Ausführungsform steht das Bauteil, wenn der Fitting mit einer Trinkwasserrohrleitung verbunden ist, in direktem Kontakt zur Trinkwasserrohrleitung. Es wurde festgestellt, dass Polyaryletherketon aufgrund seiner geringen Kriechneigung und guten Temperaturbeständigkeit insbesondere für einen gut und dauerhaft abdichtenden direkten Kontakt zur Trinkwasserrohrleitung geeignet ist, insbesondere, wenn es sich bei der Trinkwasserrohrleitung um ein Kunstoffrohr oder ein Mehrschichtverbundrohr handelt.

Bei einer Ausführungsform enthält der Kunststoff des Bauteils weniger als 5 Gew.-%, vorzugsweise weniger als 1 Gew.-%, Verstärkungsfasern. Weiter bevorzugt ist der Kunststoff, insbesondere das gesamte Bauteil, frei von Verstärkungsfasern. Die Verwendung von Verstärkungsfasern wie Glasfasern oder Kohlenstofffasern ist wegen der Anforderungen an die dabei eingesetzten Schlichten bei Bauteilen, die in direktem Kontakt mit Trinkwasser stehen, problematisch. Daher haben Kunststoffe insbesondere mit hohem Anteil an Verstärkungsfasern häufig keine Zulassung für Trinkwasseranwendungen. Es wurde festgestellt, dass Polyaryletherketon auch ohne Zugabe eines hohen Anteils an Verstärkungsfasern oder sogar ganz ohne Verstärkungsfasern die mechanischen Anforderungen für Fittings zum Verbinden mit einer Trinkwasserrohrleitung, insbesondere mit einem Kunststoffrohr oder Mehrschichtverbundrohr, erfüllt. Insbesondere wurde bei einem Pressfitting mit einem Stützkörper aus einem Polyaryletherketon umfassenden Kunststoff festgestellt, dass dieser auch ohne Verstärkungsfasern ausreichend mechanische Festigkeit aufweist, um mit einem Kunststoffrohr verpresst zu werden.

Bei einer Ausführungsform ist der Fitting ein Pressfitting und der Fitting ist an dem mindestens einem Ende des Kanals zum unlösbaren Verbinden mit einer Trinkwasserrohrleitung ausgebildet. Vorzugsweise bildet das mindestens eine Bauteil einen Stützkörper des Fittings zum Aufpressen einer Trinkwasserrohrleitung. Es wurde festgestellt, dass die mechanischen Eigenschaften von Polyaryletherketon ausreichen, um den beim Verpressen eines Stützkörpers mit einer Trinkwasserrohrleitung, insbesondere aus Kunststoff oder mit einer Innen- und/oder Außenschicht aus Kunststoff, auftretenden Presskräfte standhalten zu können.

Der Stützkörper kann beispielsweise in einen Grundkörper des Fittings, zum Beispiel einen Grundkörper aus Metall, eingepresst sein. Weiterhin kann der Stützkörper einteilig mit dem Grundkörper ausgebildet sein. Bei dem Bauteil kann es sich entsprechend insbesondere um ein Formstück handeln, dass den Grundkörper des Fittings und den Stützkörper zum Verpressen mit einer Trinkwasserrohrleitung aufweist.

Bei einem Grundkörper aus Metall hat sich gezeigt, dass bei Verwendung eines Stützkörpers aus oder mit einem Polyaryletherketon umfassenden Kunststoff eine gute Abdichtung zwischen dem Stützkörper und dem Grundkörper erreicht werden kann. Weiterhin kann durch den Grundkörper aus oder mit einem Polyaryletherketon umfassenden Kunststoff eine gute Abdichtung zwischen dem Stützkörper und der damit verpressten Trinkwasserrohrleitung erreicht werden.

Der Fitting kann beispielsweise eine um den Stützkörper angeordnete Presshülse aufweisen. Zwischen Stützkörper und Presshülse befindet sich vorzugsweise ein Einführbereich zum Einführen einer Trinkwasserrohrleitung, um diese mit dem Fitting zu verpressen.

Das Verpressen erfolgt insbesondere durch radiales Verpressen der Presshülse mit einem Presswerkzeug, wodurch die in den Einführbereich eingeschobene Trinkwasserrohrleitung mit dem Stützkörper verpresst, insbesondere in ein Außenprofil des Stützkörpers eingeformt wird.

Zusätzlich oder alternativ zur Presshülse ist auch die Verwendung einer Schiebehülse denkbar, auf die durch ein Presswerkzeug eine axiale oder zumindest teilweise axiale Kraft ausgeübt wird, die von der Schiebehülse zumindest teilweise in eine radiale Kraft umgelenkt wird, um das Verpressen von Trinkwasserrohrleitung und Stützkörper zu bewirken.

Bei einer Ausführungsform weist die Trinkwasserrohrleitung einen Kunststoff auf, wobei der Kunststoff vorzugsweise ein oder mehrere der folgenden Polymere umfasst: Polyethylen (PE), insbesondere vernetztes Polyethylen (PE-X) oder Polyethylen erhöhter Temperaturbeständigkeit (PE-RT), Polyvinylchlorid (PVC), insbesondere weichmacherfreies (PVC-U) und/oder chloriertes PVC (PVC-C), Polypropylen (PP), insbesondere Polypropylen-Homopolymer (PP-H) oder Polypropylen-Random-Copolymerisat (PP-R), Polybuten (PB), Polyphenylensulfon (PPSU), Polysulfon (PSU), Polyethylenterepthalat (PET), insbesondere temperaturbeständiges Polyethylenterepthalat, Polyamid (PA), insbesondere temperaturbeständiges Polyamid.

Insbesondere kann die Trinkwasserrohrleitung, wenn es sich um ein Mehrschichtverbundrohr handelt, eine Außen- oder Innenschicht aus einem Kunststoff aufweisen oder, wenn es sich um ein Vollkunststoffrohr handelt, daraus bestehen, wobei der Kunststoff vorzugsweise ein oder mehrere der folgenden Polymere umfasst: Polyethylen (PE), insbesondere vernetztes Polyethylen (PE-X) oder Polyethylen erhöhter Temperaturbeständigkeit (PE-RT), Polyvinylchlorid (PVC), insbesondere weichmacherfreies (PVC-U) und/oder chloriertes PVC (PVC-C), Polypropylen (PP), insbesondere Polypropylen-Homopolymer (PP-H) oder Polypropylen-Random-Copolymerisat (PP-R), Polybuten (PB), Polyphenylensulfon (PPSU), Polysulfon (PSU), Polyethylenterepthalat (PET), insbesondere temperaturbeständiges Polyethylenterepthalat, Polyamid (PA), insbesondere temperaturbeständiges Polyamid.

Es wurde festgestellt, dass der Fitting mit dem Bauteil, das einen Polyaryletherketon umfassenden Kunststoff umfasst oder daraus besteht, insbesondere für eine gute und dauerhaft abdichtende Verbindung mit einer solchen Rohrleitung geeignet ist.

Bei einer Ausführungsform erfolgt die Abdichtung zwischen Fitting, insbesondere Stützkörper, und Trinkwasserrohrleitung ohne die Verwendung einer zusätzlichen Weichdichtung. Es wurde festgestellt, dass eine Weichdichtung durch die gute dichtende Verbindung zwischen dem Polyaryletherketon umfassenden Kunststoff des Bauteils, insbesondere Stützkörpers, und der Trinkwasserrohrleitung entbehrlich ist. Es ist aber auch denkbar, dass eine zusätzliche Weichdichtung verwendet wird, insbesondere aus einem Elastomer, beispielsweise ein O-Ring oder dergleichen.

Weitere Merkmale und Vorteile des Fittings und der Verwendung ergeben sich aus der nachfolgenden Beschreibung von Ausführungsbeispielen, wobei auf die beigefügte Zeichnung Bezug genommen wird.

In der Zeichnung zeigen
- Fig. 1a-b: ein erstes Ausführungsbeispiel eines Fittings und dessen Verwendung und
- Fig. 2a-b: ein zweites Ausführungsbeispiel eines Fittings und dessen Verwendung.

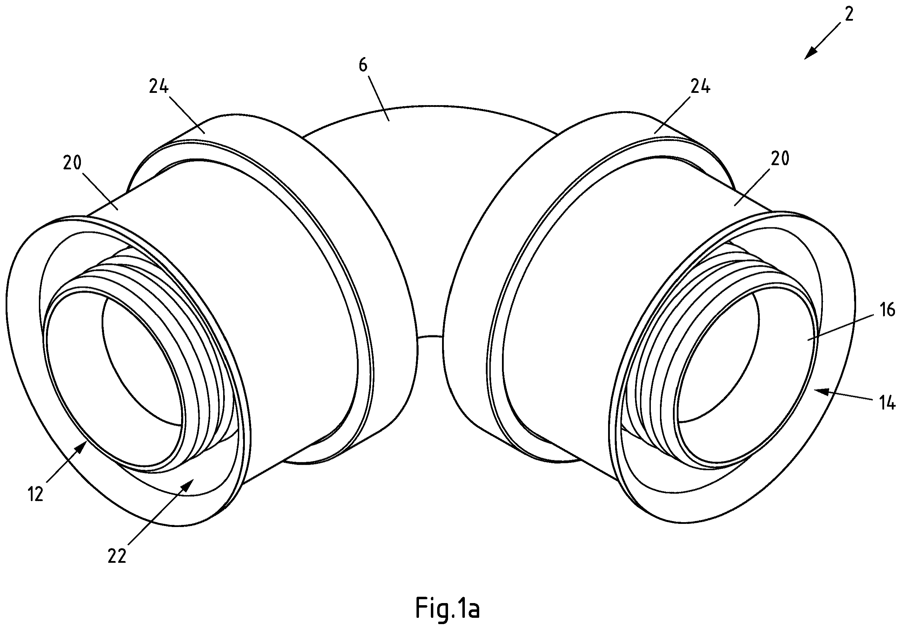

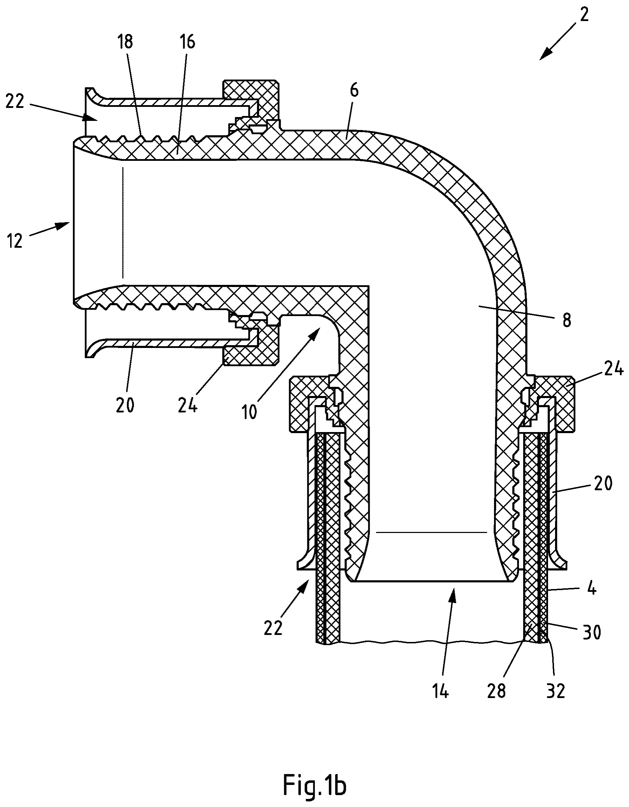

Die Fig. 1a-b zeigen ein erstes Ausführungsbeispiel des Fittings und dessen Verwendung. Fig. 1a zeigt eine perspektivische Ansicht und Fig. 1b eine Schnittansicht des Fittings 2.

Der Fitting 2 weist einen Grundkörper 6 aus Kunststoff auf, der einen Kanal 8 zum Führen von Trinkwasser aufweist. Der Fitting 2 ist vorliegend als Winkel ausgebildet, so dass der Kanal 8 eine Biegung 10 aufweist und zwischen zwei Enden 12, 14 des Fittings 2 verläuft. Es sind aber auch andere Ausgestaltungen denkbar, zum Beispiel Fittings mit einem geraden Kanal oder mit mehr als zwei Enden, beispielsweise bei einer Abzweigung wie zum Beispiel einem Kreuzungs-T-Stück.

Der Fitting 2 ist an den Enden 12, 14 des Kanals 8 zum Verbinden mit einem jeweiligen Trinkwasserrohrleitung ausgebildet. Es ist auch denkbar, dass der Fitting 2 lediglich an einem der Enden 12, 14 zum Verbinden mit einem Trinkwasserrohrleitung ausgebildet ist.

Bei dem Fitting 2 handelt es sich vorliegend um einen Pressverbinder. Entsprechend ist der Fitting 2 an den Enden 12, 14 zum unlösbaren Verbinden mit einer jeweiligen Trinkwasserrohrleitung durch Verpressen ausgebildet. Zu diesem Zweck ist der Grundkörper 6 im Bereich der Enden 12, 14 jeweils als Stützkörper 16 mit einem Außenprofil 18 ausgebildet, in das sich die Innenseite der Trinkwasserrohrleitung beim Verpressen mit dem Fitting 2 einformt. Der Grundkörper 6 und der Stützkörper 16 sind bei dem Fitting 2 also einteilig ausgebildet und stellen ein Formstück dar. Die Fig. 1a-b zeigen den Fitting 2 im unverpressten Zustand.

Weiterhin weist der Fitting 2 einen Pressring 20 aus Metall auf, der über einen Kopplungsring 24 aus Kunststoff auf der Außenseite mit dem Grundkörper 6 verbunden ist. Zwischen dem Pressring 20 und dem Stützkörper 16 befindet sich ein ringförmiger Einführbereich 22 zum Einführen einer zu verbindenden Trinkwasserrohrleitung.

Der den Kanal 8 aufweisende und den Stützkörper 16 bildende Grundkörper 6 stellt daher ein Bauteil des Fittings dar, das, wenn der Fitting 2 mit einer Trinkwasserrohrleitung 4 verbunden ist und Trinkwasser durch den Kanal geleitet wird, in direktem Kontakt mit dem Trinkwasser steht. Weiterhin stellt der Grundkörper 6 ein Bauteil dar, das, wenn der Fitting 2 mit einer Trinkwasserrohrleitung 4 verbunden ist, in direktem Kontakt zur Trinkwasserrohrleitung 4 steht.

Der Grundkörper 6 des Fittings 2 ist vorliegend aus einem Polyaryletherketon umfassenden Kunststoff gebildet. Die festgestellte Trinkwasser-Kompatibilität von Polyaryletherketon erlaubt den Einsatz dieses Kunststoffs für den den Kanal 8 bildenden Grundkörper 6, der somit in direktem Kontakt mit Trinkwasser steht.

Der Kunststoff des Grundkörpers kann beispielsweise 35 Gew.-% Polyaryletherketon, 0 - 10 Gew.-% Zusatzstoffe, beispielsweise Pigmente oder Füllstoffe, und Polyphenylensulfon als Rest, d.h. 55 - 65 Gew.-% Polyphenylensulfon, umfassen. Der Grundkörper 6 kann durch Spritzguss hergestellt sein.

Zum Verpressen des Fittings 2 mit einer Trinkwasserrohrleitung wird ein Rohrende einer Trinkwasserrohrleitung, zum Beispiel bis zum Anschlag, in den Einführbereich 22 eingeführt.

Fig. 1b zeigt exemplarisch ein am Ende 14 des Fittings 2 in den Einführbereich 22 eingeführtes Rohrende einer Trinkwasserrohrleitung 4. Bei der Trinkwasserrohrleitung 4 handelt es sich vorliegend um ein Mehrschichtverbundrohr mit einer Innenschicht 28 und einer Außenschicht 30 aus Kunststoff, beispielsweise PE-RT, und einer dazwischen angeordneten, eingebetteten Schicht 32 aus Aluminium.

Zum Verpressen des Fittings 2 mit der Trinkwasserrohrleitung 4 wird mit einem Presswerkzeug eine starke radiale Kraft auf den Pressring 20 ausgeübt, wodurch diese durch Kaltverformung die Trinkwasserrohrleitung 4 mit der Innenschicht 28 in das Außenprofil 18 des Stützkörpers 16 einformen. Die gleichzeitige Umformung des Pressrings 20 verhindert ein Zurückfedern des Materials der Trinkwasserrohrleitung 4 und führt damit zu einer dauerhaften, unlösbaren Verbindung zwischen Fitting 2 und Trinkwasserrohrleitung 4.

Durch die mechanischen Eigenschaften des aus dem Polyaryletherketon umfassenden Kunststoff gebildeten Stützkörpers 16 hält dieser den hohen Presskräften bei diesem Umformvorgang stand. Weiter führt die geringe Kriechneigung und hohe Temperaturbeständigkeit von Polyaryletherketon dazu, dass eine dauerhaft dichte Verbindung zwischen Stützkörper 16 und Trinkwasserrohrleitung 4 erreicht wird, auch bei hohen Temperaturen, beispielsweise beim Einsatz in Warmwasserleitungen. Insbesondere erfolgt die Abdichtung zwischen dem Stützkörper und der Trinkwasserrohrleitung 4 ohne zusätzliche Weichdichtung, da der Stützkörper 16 aus dem Polyaryletherketon umfassenden Kunststoff eine ausreichend dichte Verbindung bewirkt. Es ist aber auch der Einsatz eines Weichkörpers, insbesondere Elastomers, z.B. eines O-Rings, denkbar.

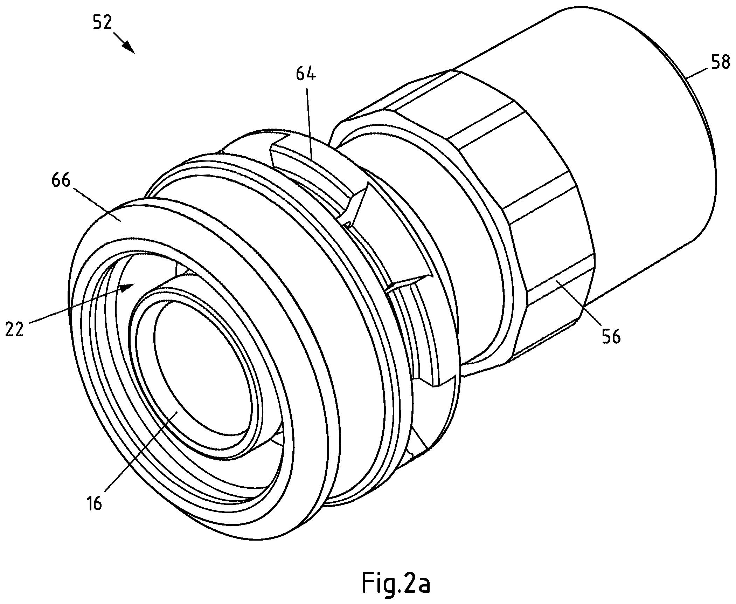

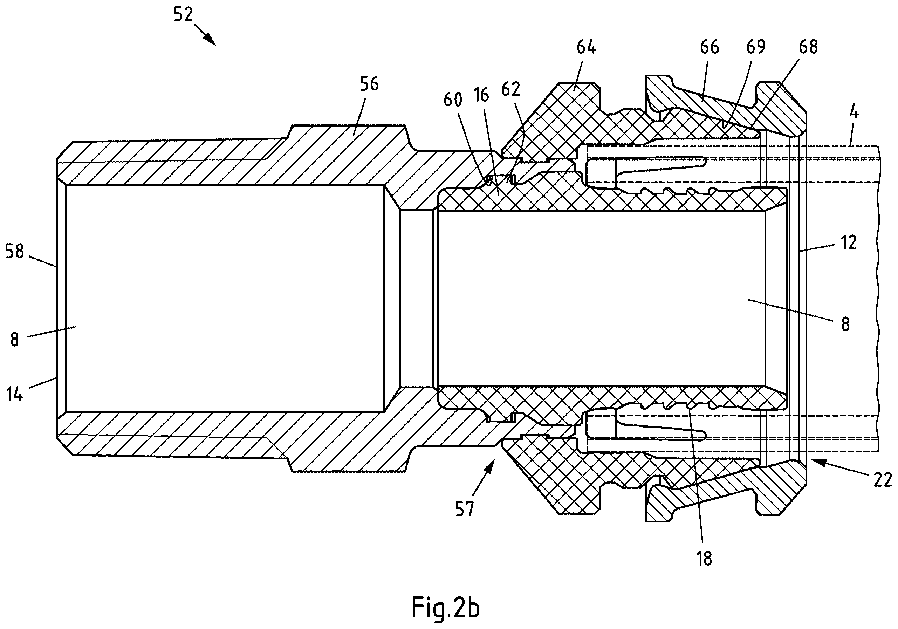

Die Fig. 2a-b zeigen ein zweites Ausführungsbeispiel des Fittings und dessen Verwendung. Fig. 2a zeigt eine perspektivische Ansicht und Fig. 2b eine Schnittansicht des Fittings 52.

Der Fitting 52 weist einen ähnlichen Aufbau auf wie der Fitting 2. Einander entsprechende Komponenten sind mit denselben Bezugszeichen versehen und es wird insoweit auf die obige Beschreibung der Fig. 1a-b verwiesen. Fig. 2a-b zeigen den als Pressfitting ausgebildeten Fitting 52 in unverpresstem Zustand. Weiterhin zeigt die Fig. 2b beispielhaft (mit gestrichelten Linien) ein in den Einführbereich eingeführtes Rohrende einer Trinkwasserrohrleitung 4.

Der Fitting 52 unterscheidet sich dadurch vom Fitting 2, dass anstelle des einteilig mit dem Stützkörper 16 ausgebildeten Grundkörpers 6 aus Kunststoff ein gesondert ausgebildeter Grundkörper 56 aus Metall, beispielsweise aus Siliziumbronze, vorgesehen ist, durch den der Kanal 8 läuft.

An einem Ende 57 des Grundkörpers 56 ist ein Stützkörper 16 in den Grundkörper 56 eingepresst. Zu diesem Zweck weisen der Grundkörper 56 an seiner Innenseite und der Stützkörper 16 an seiner Außenseite zueinander korrespondierende Konturen 60, 62 auf. Der Grundkörper 56 und der Stützkörper 16 sind bei dem Fitting 52 demnach zweiteilig ausgebildet.

Auf der Außenseite ist ein hülsenförmiges Übertragungselement 64 aus Kunststoff formschlüssig mit dem Grundkörper 56 verbunden. Weiter ist eine Gleithülse 66 aus Metall vorgesehen, die in Fig. 2a-b in einer Ausgangsposition mit dem Übertragungselement 64 verrastet ist. Der Kanal 8 erstreckt sich ausgehend vom Grundkörper 56 weiter durch den Stützkörper 16 bis zu einem Ende 12 des Fittings 52.

An dem dem Ende 57 gegenüberliegenden Ende 58 kann der Grundkörper 6 beispielsweise einen Gewindeübergang, vorliegend zum Beispiel ein Außengewinde, zum Verbinden mit einem korrespondierenden Gewinde, vorliegend zum Beispiel Innengewinde, eines Anschlusses aufweisen. Weiterhin kann der Grundkörper 6 zum Beispiel als Teil einer Wandscheibe ausgebildet sein.

Der Stützkörper 16 ist - wie der Grundkörper 6 aus Fig. 1a-b - aus einem Polyaryletherketon umfassenden Kunststoff, insbesondere aus einem mit Zusatzstoffen wie Pigmenten versetzten Polymergemisch, das neben Polyaryletherketon ein oder mehrere weitere Polymere enthält. Auf diese Weise wird an den Konturen 60, 62 eine gute Abdichtung zwischen Stützkörper 16 und Grundkörper 56 erreicht, da das Polyaryletherketon eine geringe Kriechneigung und hohe Temperaturbeständigkeit aufweist. Weiterhin wird beim Verpressen des Fittings 52 mit einem in den Einführbereich 22 eingeführten Trinkwasserrohrleitung 4, bei dem es sich wie in Fig. 2a-b zum Beispiel um ein Mehrschichtverbundrohr handeln kann, eine dauerhaft dichte, temperaturstabile Verbindung zwischen Stützkörper 16 und in dessen Außenprofil 18 eingeformtem Trinkwasserrohrleitung 4 erreicht. Die mechanischen Eigenschaften des Polyaryletherketons bewirken zudem eine ausreichende Festigkeit des Stützkörpers 16 gegenüber den beim Verpressen auftretenden Kräften.

Zum Verbinden des Fittings 52 mit der Trinkwasserrohrleitung 4 werden das Übertragungselement 64 und die Gleithülse 66, durch ein Presswerkzeug mit hoher Presskraft radial nach innen und axial aufeinander zu bewegt, wobei die zueinander korrespondierenden schrägen Gleitflächen 68, 69 des Übertragungselements 64 und der Gleithülse 66 übereinander hinweg gleiten und eine gleichmäßige radiale Presskraft auf die Trinkwasserrohrleitung 4 bewirken, die sich dadurch in das Außenprofil 18 des Stützkörpers 16 einformt. Das Übertragungselement 64 und die Gleithülse 66 verrasten bei Erreichen der axialen Endstellung miteinander und verhindern dadurch ein Zurückfedern des Materials der Trinkwasserrohrleitung 4 und führen damit zu einer dauerhaften, unlösbaren Verbindung zwischen Fitting 52 und Trinkwasserrohrleitung 4. Die Abdichtung zwischen dem Stützkörper 16 und dem Trinkwasserrohrleitung 4 erfolgt ohne zusätzliche Weichdichtung, da der Stützkörper 16 aus dem Polyaryletherketon umfassenden Kunststoff eine ausreichend dichte Verbindung bewirkt. Es ist aber auch der Einsatz eines Weichkörpers, insbesondere Elastomers, z.B. eines O-Rings, denkbar.

### Bezugszeichenliste:

- 2,52: Fitting
- 4: Trinkwasserrohrleitung
- 6, 56: Grundkörper
- 8: Kanal
- 10: Biegung
- 12, 14: Enden des Kanals
- 16: Stützkörper
- 18: Außenprofil
- 20: Pressring
- 22: Einführbereich
- 24: Kopplungsring
- 28: Innenschicht
- 30: Außenschicht
- 32: eingebettete Schicht
- 57, 58: Enden des Grundkörpers
- 60, 62: korrespondierende Konturen
- 64: Übertragungselement
- 66: Gleithülse
- 68, 69: korrespondierende Gleitflächen

## Patentansprüche

1. Fitting (2, 52) zum Verbinden mit einer Trinkwasserrohrleitung (4),
- wobei der Fitting (2, 52) einen Kanal (8) zum Führen von Trinkwasser aufweist und
- wobei der Fitting (2, 52) an mindestens einem Ende (12, 14) des Kanals (8) zum Verbinden mit einer Trinkwasserrohrleitung (4) ausgebildet ist,
**dadurch gekennzeichnet,**
- **dass** mindestens ein Bauteil (6, 16) des Fittings (2, 52), das, wenn der Fitting (2, 52) mit einer Trinkwasserrohrleitung (4) verbunden ist und Trinkwasser durch den Kanal (8) geleitet wird, in direktem Kontakt mit dem Trinkwasser steht, einen Polyaryletherketon umfassenden Kunststoff umfasst oder daraus besteht.

2. Fitting nach Anspruch 1,
**dadurch gekennzeichnet, dass** der Polyaryletherketon umfassenden Kunststoff ein Polymergemisch umfasst, das neben Polyaryletherketon ein oder mehrere weitere Polymere, insbesondere Polyphenylsulfon und/oder Polyphenylsulfid, enthält.

3. Fitting nach Anspruch 1 oder 2,
**dadurch gekennzeichnet, dass** der Polyaryletherketon-Anteil im Polyaryletherketon umfassenden Kunststoff im Bereich 15 - 60 Gew.-%, vorzugsweise 30 - 55 Gew.-%, insbesondere 35 - 40 Gew.-%, liegt.

4. Fitting nach einem der Ansprüche 1 bis 3, **dadurch gekennzeichnet, dass** es sich bei dem Bauteil (6, 16) um einen Stützkörper (16) und/oder um ein Formstück (6) des Fittings (2, 52) handelt.

5. Fitting nach einem der Ansprüche 1 bis 4,
**dadurch gekennzeichnet, dass** das Bauteil (6, 16), wenn der Fitting (2, 52) mit einer Trinkwasserrohrleitung (4) verbunden ist, in direktem Kontakt zur Trinkwasserrohrleitung (4) steht.

6. Fitting nach einem der Ansprüche 1 bis 5,
**dadurch gekennzeichnet, dass** der Kunststoff des Bauteils (6, 16) weniger als 5 Gew.-%, insbesondere weniger als 1 Gew.-%, Verstärkungsfasern enthält, vorzugsweise frei von Verstärkungsfasern ist.

7. Fitting nach einem der Ansprüche 1 bis 6,
**dadurch gekennzeichnet, dass** der Fitting (2, 52) ein Pressfitting, Schraubfitting, Schiebehülsenfitting oder Steckfitting ist.

8. Fitting nach einem der Ansprüche 1 bis 7,
**dadurch gekennzeichnet, dass** der Fitting (2, 52) ein Pressfitting ist und der Fitting an dem mindestens einem Ende (12, 14) des Kanals (8) zum unlösbaren Verbinden mit einer Trinkwasserrohrleitung (4) ausgebildet ist, und dass vorzugsweise das mindestens eine Bauteil (6, 16) einen Stützkörper (16) des Fittings (2, 52) zum Aufpressen einer Trinkwasserrohrleitung (4) bildet.

9. Verwendung eines Fittings (2, 52) nach einem der Ansprüche 1 bis 8 zum Verbinden mit einer Trinkwasserrohrleitung (4).

10. Verwendung nach Anspruch 9,
**dadurch gekennzeichnet, dass** die Trinkwasserrohrleitung (4) aus Kunststoff ist oder ein Mehrschichtverbundrohr mit einer Außen- und/oder Innenschicht aus Kunststoff ist.

11. Verwendung nach Anspruch 9 oder 10,
**dadurch gekennzeichnet, dass** die Trinkwasserrohrleitung (4) einen Kunststoff aufweist, insbesondere eine Außen- oder Innenschicht aus Kunststoff aufweist oder daraus besteht, wobei der Kunststoff vorzugsweise ein oder mehrere der folgenden Polymere umfasst: Polyethylen (PE), insbesondere vernetztes Polyethylen (PE-X) oder Polyethylen erhöhter Temperaturbeständigkeit (PE-RT), Polyvinylchlorid (PVC), insbesondere weichmacherfreies (PVC-U) und/oder chloriertes PVC (PVC-C), Polypropylen (PP), insbesondere Polypropylen-Homopolymer (PP-H) oder Polypropylen-Random-Copolymerisat (PP-R), Polybuten (PB), Polyphenylensulfon (PPSU), Polysulfon (PSU), Polyethylenterepthalat (PET), insbesondere temperaturbeständiges Polyethylenterepthalat, Polyamid (PA), insbesondere temperaturbeständiges Polyamid.
